# EUROPEAN PATENT APPLICATION

(11) **EP 4 498 723 A1**
(43) Date of publication of application: **29.01.2025**
(21) Application number: 23791821.4
(22) Date of filing: 17.04.2023
(51) Int. Cl.: H04W 16/26, H04W 16/28

(54) **CONTROL TERMINAL, BASE STATION, AND COMMUNICATION METHOD**

(30) Priority: 22.04.2022 JP 2022071094
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/015302
(87) International publication number: WO 2023/204173

(57) **Abstract**

An NCR-UE (control terminal) that controls an NCR apparatus (relay apparatus) that relays a radio signal between a gNB (base station) and a UE (user equipment) in a mobile communication system receives, from the gNB, configuration information used by the NCR apparatus to direct a beam to the UE, and controls the NCR apparatus to direct the beam to the UE, based on the configuration information.

## Description

### TECHNICAL FIELD

The present disclosure relates to a control terminal, a base station, and a communication method used in a mobile communication system.

### BACKGROUND OF INVENTION

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio signals (radio waves) in the high frequency band such as a millimeter wave band or a terahertz wave band have high rectilinearity, reduction of coverage of a base station is a problem. In order to solve such a problem, a repeater apparatus is attracting attention that is a kind of relay apparatuses relaying radio signals between a base station and a user equipment, and can be controlled from a network (see, for example, Non-Patent Document 1). Such a repeater apparatus can extend the coverage of the base station while suppressing occurrence of interference by, for example, amplifying a radio signal received from the base station and transmitting the radio signal through directional transmission.

### CITATION LIST

### NON-PATENT LITERATURE

Non-Patent Document 1: 3GPP Contribution: RP-213700, "New SI: Study on NR Network-controlled Repeaters"

### SUMMARY

In a first aspect, a control terminal is an apparatus that controls a relay apparatus that relays a radio signal between a base station and a user equipment in a mobile communication system. The control terminal includes a receiver that receives, from the base station, configuration information used by the relay apparatus to direct a beam to the user equipment, and a controller that controls the relay apparatus to direct the beam to the user equipment, based on the configuration information.

In a second aspect, a base station is used in a mobile communication system including a control terminal that controls a relay apparatus that relays a radio signal between the base station and a user equipment. The base station includes a transmitter that transmits, to the control terminal, configuration information used by the relay apparatus to direct a beam to the user equipment.

In a third aspect, a communication method is a method performed by a control terminal that controls a relay apparatus that relays a radio signal between a base station and a user equipment in a mobile communication system. The communication method includes a step of receiving, from the base station, configuration information used by the relay apparatus to direct a beam to the user equipment, and a step of controlling the relay apparatus to direct the beam to the user equipment, based on the configuration information.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a radio interface of a user plane handling data.
FIG. 3 is a diagram illustrating a configuration of a protocol stack of a radio interface of a control plane handling signaling (control signal).
FIG. 4 is a diagram illustrating an application scenario for an NCR apparatus (relay apparatus) according to the embodiment.
FIG. 5 is a diagram illustrating an application scenario for the NCR apparatus according to the embodiment.
FIG. 6 is a diagram illustrating a configuration example of a protocol stack in the mobile communication system that includes the NCR apparatus and an NCR-UE (control terminal) according to the embodiment.
FIG. 7 is a diagram illustrating configuration examples of the NCR-UE and the NCR apparatus according to the embodiment.
FIG. 8 is a diagram illustrating a configuration example of a gNB (base station) according to the embodiment.
FIG. 9 is a diagram illustrating an example of downlink signaling from the gNB to the NCR-UE according to the embodiment.
FIG. 10 is a diagram illustrating an example of an NCR control signal according to the embodiment.
FIG. 11 is a diagram illustrating an example of uplink signaling from the NCR-UE to the gNB according to the embodiment.
FIG. 12 is a diagram illustrating an example of NCR capability information according to the embodiment.
FIG. 13 is a diagram illustrating an example of an operation of the mobile communication system according to the embodiment.
FIG. 14 is a diagram for describing beamforming control according to the embodiment.
FIG. 15 is a diagram illustrating an example of an operation flow of a first operation pattern of the beamforming control according to the embodiment.
FIG. 16 is a diagram illustrating another example of the operation flow of the first operation pattern of the beamforming control according to the embodiment.
FIG. 17 is a diagram illustrating an example of an operation flow of a second operation pattern of the beamforming control according to the embodiment.
FIG. 18 is a diagram for describing an RIS apparatus (relay apparatus) according to another embodiment.
FIG. 19 is a diagram for describing the RIS apparatus according to another embodiment.
FIG. 20 is a diagram for describing the RIS apparatus according to another embodiment.
FIG. 21 is a diagram for describing the RIS apparatus according to another embodiment.

### DESCRIPTION OF EMBODIMENTS

When a relay apparatus such as a repeater apparatus is controlled from a network, a control technique for specifically controlling the relay apparatus has not yet been established, and efficient coverage extension is currently difficult to perform using the relay apparatus.

The present disclosure provides appropriate control of a relay apparatus that performs relay transmission between a base station and a user equipment.

A mobile communication system according to an embodiment is described with reference to the drawings. In the description of the drawings, the same or similar parts are denoted by the same or similar reference signs.

### (1) Configuration of mobile communication system

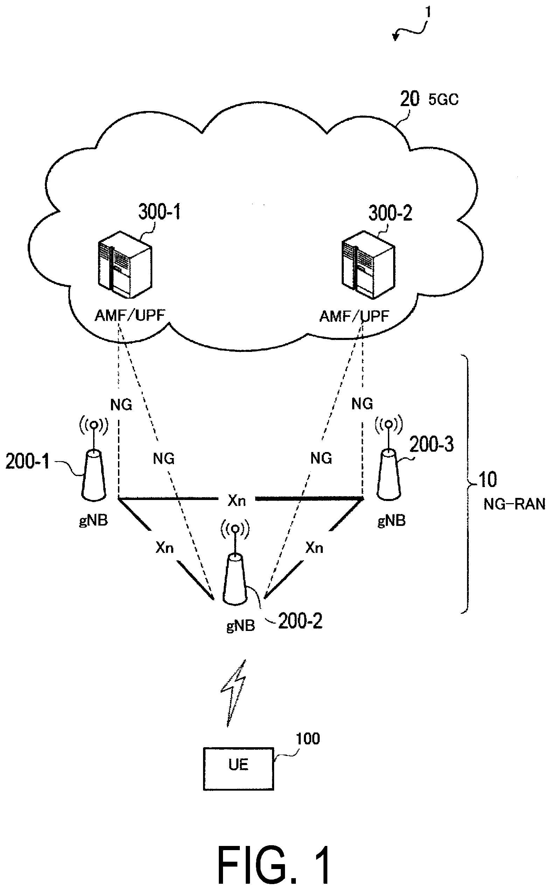

FIG. 1 is a diagram illustrating a configuration of a mobile communication system according to an embodiment. The mobile communication system 1 complies with the 5th Generation System (5GS) of the 3GPP (trade name) standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface, which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface, which is an interface between a base station and the core network.

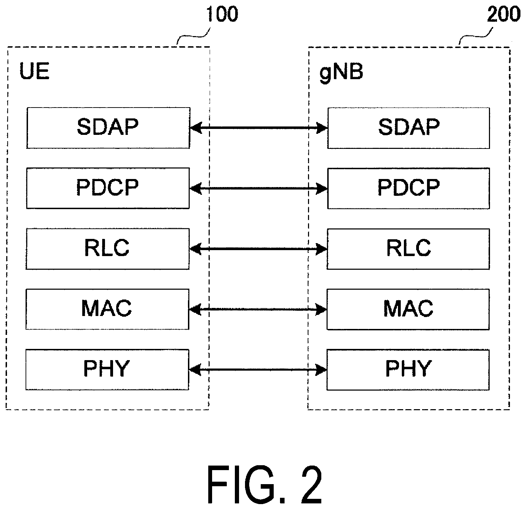

FIG. 2 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

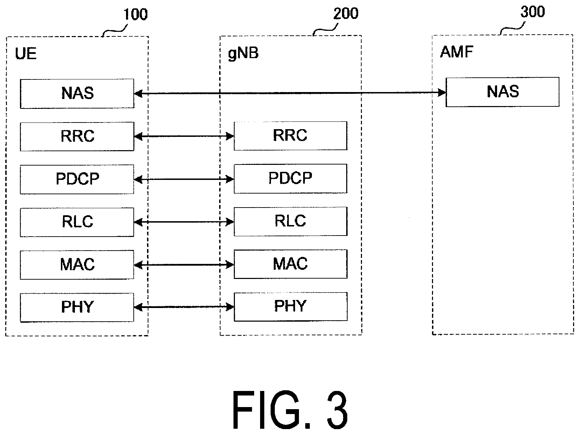

FIG. 3 is a diagram illustrating a configuration of a protocol stack of a radio interface of a control plane handling signaling (a control signal).

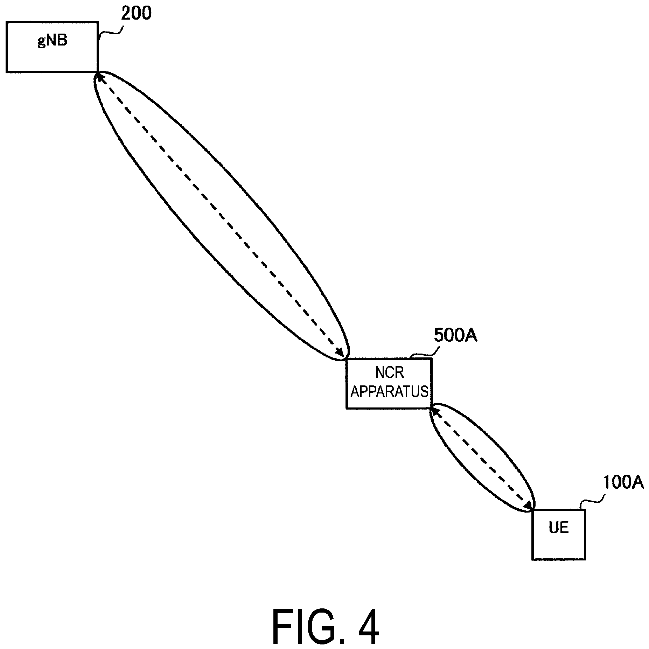

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer, which is positioned upper than the RRC layer, performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### (2) Application Scenario for Relay Apparatus

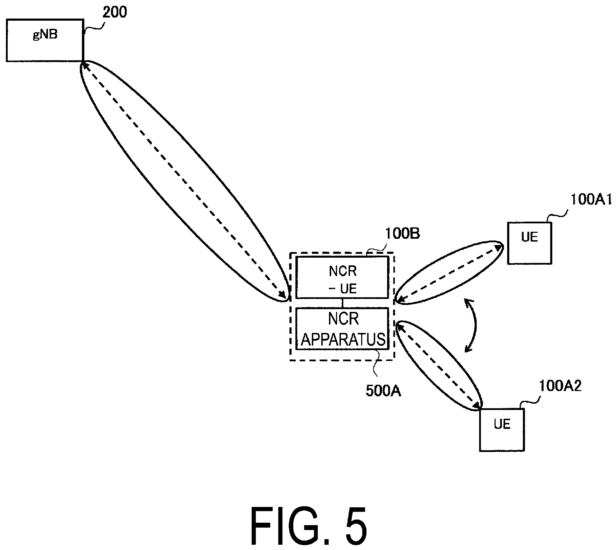

Application scenarios for an NCR apparatus are described that is the relay apparatus according to the embodiment. FIGs. 4 and 5 are diagrams illustrating the application scenarios for the NCR apparatus according to the embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, a UE 100A may be located outside a coverage area of the gNB 200, for example, outside an area where the UE 100A can receive radio signals directly from the gNB 200. The UE 100A may not communicate with the gNB 200 within a line of sight because of obstacles existing between the gNB 200 and the UE 100A.

In the embodiment, a repeater apparatus (500A) is a type of a relay apparatus relaying radio signals between the gNB 200 and the UE 100A, and can be controlled from the network. The repeater apparatus (500A) is introduced into the mobile communication system 1. Hereinafter, such a repeater apparatus is referred to as a Network-Controlled Repeater (NCR) apparatus. Such a repeater apparatus may be referred to as a smart repeater apparatus.

For example, the NCR apparatus 500A amplifies a radio signal (radio signal) received from the gNB 200 and transmits the radio signal through directional transmission. To be specific, the NCR apparatus 500A receives a radio signal transmitted by the gNB 200 through beamforming. The NCR apparatus 500A amplifies the received radio signal and transmits the amplified radio signal through the directional transmission. Here, the NCR apparatus 500A may transmit a radio signal with a fixed directivity. Alternatively, the NCR apparatus 500A may transmit a radio signal with a variable (adaptive) directional beam. This can efficiently extend the coverage of the gNB 200. Although in the embodiment, it is assumed that the NCR apparatus 500A is applied to downlink communication from the gNB 200 to the UE 100A, the NCR apparatus 500A can also be applied to uplink communication from the UE 100A to the gNB 200.

As illustrated in FIG. 5, a new UE (hereinafter referred to as an "NCR-UE") 100B is introduced that is a type of the control terminal for controlling the NCR apparatus 500A. The NCR-UE 100B controls the NCR apparatus 500A in cooperation with the gNB 200 by establishing a wireless connection to the gNB 200 and performing wireless communication to the gNB 200. By doing so, efficient coverage extension can be achieved using the NCR apparatus 500A. The NCR-UE 100B controls the NCR apparatus 500A in accordance with control from the gNB 200.

The NCR-UE 100B may be configured separately from the NCR apparatus 500A. For example, the NCR-UE 100B may be located near the NCR apparatus 500A and may be electrically connected to the NCR apparatus 500A. The NCR-UE 100B may be connected to the NCR apparatus 500A by wire or wireless. The NCR-UE 100B may be configured to be integrated with the NCR apparatus 500A. The NCR-UE 100B and the NCR apparatus 500A may be fixedly installed at a coverage edge (cell edge) of the base station 200, or on a wall surface or window of any building, for example. The NCR-UE 100B and the NCR apparatus 500A may be installed in, for example, a vehicle to be movable. One NCR-UE 100B may control a plurality of NCR apparatuses 500A.

In the example illustrated in FIG. 5, the NCR apparatus 500A dynamically or semi-statically changes a beam to be transmitted or received. For example, the NCR apparatus 500A forms a beam toward each of a UE 100A1 and a UE 100A2. The NCR apparatus 500A may also form a beam toward the gNB 200. For example, in a communication resource between the gNB 200 and the UE 100A1, the NCR apparatus 500A transmits a radio signal received from the gNB 200 toward the UE 100A1 through beamforming and/or transmits a radio signal received from the UE 100A1 toward the gNB 200 through beamforming. In a communication resource between the gNB 200 and the UE 100A2, the NCR apparatus 500A transmits a radio signal received from the gNB 200 toward the UE 100A2 through beamforming and/or transmits a radio signal received from the UE 100A2 toward the gNB 200 through beamforming. Instead of or in addition to the beamforming, the NCR apparatus 500A may perform null forming (so-called null steering) toward a UE 100 that is not a communication partner (not illustrated) and/or a neighboring gNB 200 (not illustrated) to suppress the interference. Hereinafter, a beam (beamforming) may be interpreted as a null (null steering). A beam (beamforming) may be interpreted as a beam and a null (beamforming and null steering).

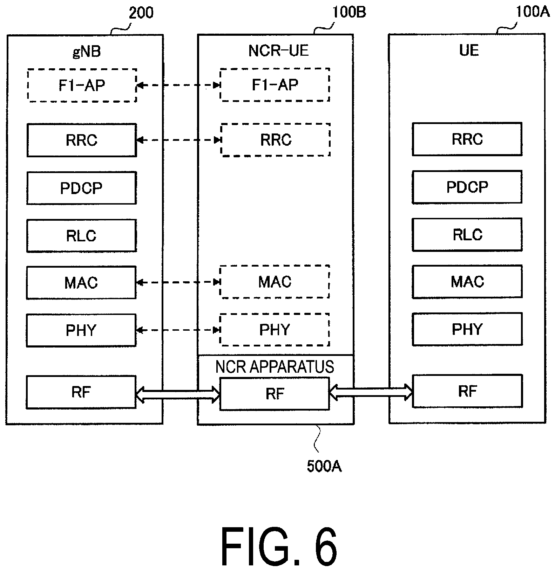

FIG. 6 is a diagram illustrating a configuration example of a protocol stack in the mobile communication system 1 that includes the NCR apparatus 500A and the NCR-UE 100B according to the embodiment.

As illustrated in FIG. 6, the NCR apparatus 500A relays radio signals transmitted and received between the gNB 200 and the UE 100A. The NCR apparatus 500A has a Radio Frequency (RF) function of amplifying and relaying a received radio signal, and performs directional transmission through beamforming (for example, analog beamforming).

The NCR-UE 100B includes at least one layer (entity) selected from the group consisting of PHY, MAC, RRC, and F1-Application Protocol (AP). The F1-AP is a type of a fronthaul interface. The NCR-UE 100B communicates downlink signaling and/or uplink signaling, which will be described below, with the gNB 200 through at least one selected from the group consisting of the PHY, the MAC, RRC, and the F1-AP. When the NCR-UE 100B is a type or a part of the base station, the NCR-UE 100B may communicate with the gNB 200 through an AP of Xn (Xn-AP), which is an inter-base station interface.

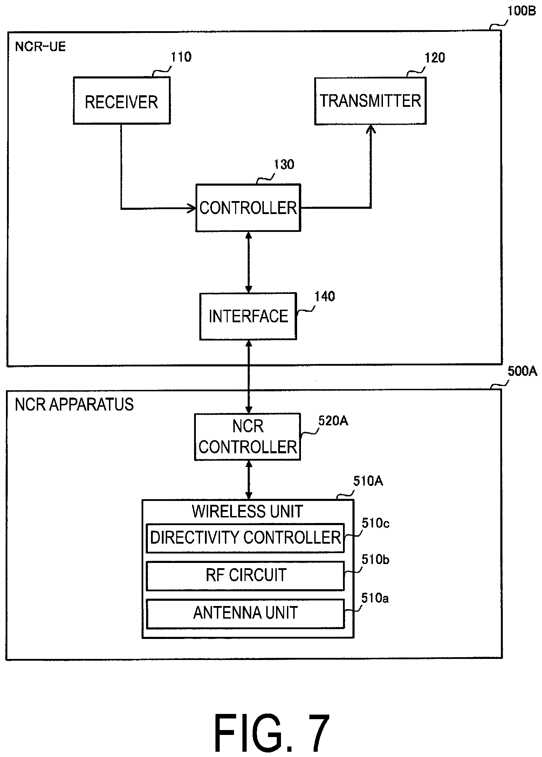

(3) Configuration Examples of Control Terminal and Relay Apparatus In the embodiment, configurations of the NCR-UE 100B (control terminal) and the NCR apparatus 500A (relay apparatus) are described. FIG. 7 is a diagram illustrating configuration examples of the NCR-UE 100B and the NCR apparatus 500A according to the embodiment.

As illustrated in FIG. 7, the NCR-UE 100B includes a receiver 110, a transmitter 120, a controller 130, and an interface 140.

The receiver 110 performs various types of reception under control of the controller 130. The receiver 110 includes an antenna and a reception device. The reception device converts a radio signal (radio signal) received through the antenna into a baseband signal (a reception signal) and outputs the resulting signal to the controller 130. The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control in the NCR-UE 100B. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 130 performs a function of at least one layer selected from the group consisting of the PHY, the MAC, the RRC, and the F1-AP.

The interface 140 is electrically connected to the NCR apparatus 500A. The controller 130 controls the NCR apparatus 500A via the interface 140. Note that when the NCR-UE 100B is configured to be integrated with the NCR apparatus 500A, the NCR-UE 100B may not need to include the interface 140. The receiver 110 and the transmitter 120 of the NCR-UE 100B may be configured to be integrated with a wireless unit 510A of the NCR apparatus 500A.

The NCR apparatus 500A includes the wireless unit 510A and an NCR controller 520A. The wireless unit 510A includes an antenna unit 510a including a plurality of antennas, an RF circuit 510b including an amplifier, and a directivity controller 510c controlling directivity of the antenna unit 510a. The RF circuit 510b amplifies and relays (transmits) radio signals transmitted and received by the antenna unit 510a. The RF circuit 510b may convert a radio signal, which is an analog signal, into a digital signal, and may reconvert the digital signal into an analog signal after digital signal processing. The directivity controller 510c may perform analog beamforming by analog signal processing, digital beamforming by the digital signal processing, or hybrid analog and digital beamforming.

The NCR controller 520A controls the wireless unit 510A in response to a control signal from the controller 130 of the NCR-UE 100B. The NCR controller 520A may include at least one processor. The NCR controller 520A may output information relating to a capability of the NCR apparatus 500A to the NCR-UE 100B. Note that when the NCR-UE 100B is configured to be integrated with the NCR apparatus 500A, the controller 130 of the NCR-UE 100B may also be configured to be integrated with the NCR controller 520A of the NCR apparatus 500A.

In the embodiment, the receiver 110 of the NCR-UE 100B receives signaling (downlink signaling) used to control the NCR apparatus 500A from the gNB 200 through wireless communication. The controller 130 of the NCR-UE 100B controls the NCR apparatus 500A based on the signaling. This enables the gNB 200 to control the NCR apparatus 500A via the NCR-UE 100B.

In the embodiment, the controller 130 of the NCR-UE 100B controls the NCR apparatus 500A. The controller 130 of the NCR-UE 100B acquires NCR capability information indicating the capability of the NCR apparatus 500A from the NCR apparatus 500A (NCR controller 520A). The transmitter 120 of the NCR-UE 100B transmits the acquired NCR capability information to the gNB 200 through wireless communication. The NCR capability information is an example of the uplink signaling from the NCR-UE 100B to the gNB 200. This enables the gNB 200 to grasp the capability of the NCR apparatus 500A.

### (4) Configuration Example of Base Station

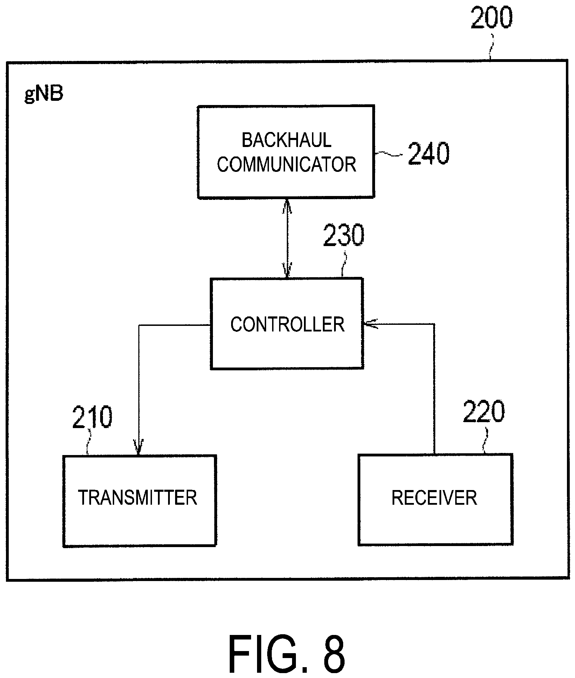

In the embodiment, a configuration of the gNB 200 (base station) is described. FIG. 8 is a diagram illustrating a configuration example of the gNB 200 according to the embodiment.

As illustrated in FIG. 8, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

In the embodiment, the transmitter 210 of the gNB 200 transmits signaling (downlink signaling) used to control the NCR apparatus 500A to the NCR-UE 100B controlling the NCR apparatus 500A through wireless communication. This enables the gNB 200 to control the NCR apparatus 500A via the NCR-UE 100B.

In the embodiment, the receiver 220 of the gNB 200 receives the NCR capability information indicating the capability of the NCR apparatus 500A from the NCR-UE 100B controlling the NCR apparatus 500A through wireless communication. The NCR capability information is an example of the uplink signaling from the NCR-UE 100B to the gNB 200. This enables the gNB 200 to grasp the capability of the NCR apparatus 500A.

### (5) Example of Operation Scenario

Now, in the embodiment, an example of an operation scenario of the mobile communication system 1 will be described.

### (5.1) Example of Downlink Signaling

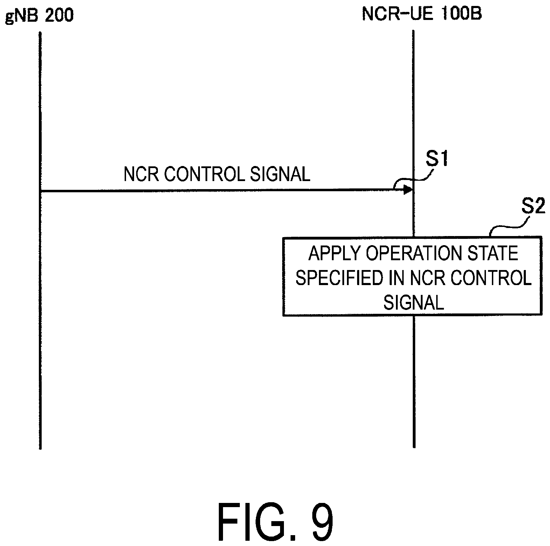

FIG. 9 is a diagram illustrating an example of the downlink signaling from the gNB 200 to the NCR-UE 100B according to the embodiment.

The gNB 200 (transmitter 210) transmits downlink signaling to the NCR-UE 100B. The downlink signaling may be an RRC message that is RRC layer (i.e., layer-3) signaling. The downlink signaling may be a MAC Control Element (CE) that is MAC layer (i.e., layer-2) signaling. The downlink signaling may be downlink control information (DCI) that is PHY layer (i.e., layer-1) signaling. The downlink signaling may be UE-specific signaling, or broadcast signaling. The downlink signaling may be a fronthaul message (for example, F1-AP message). When the NCR-UE 100B is a type or a part of the base station, the NCR-UE 100B may communicate with the gNB 200 through an AP of Xn (Xn-AP), which is an inter-base station interface.

For example, as illustrated in FIG. 9, the gNB 200 (transmitter 210) transmits an NCR control signal designating an operation state of the NCR apparatus 500A to the NCR-UE 100B having established a wireless connection to the gNB 200 (step S1). In the following embodiment, an example is mainly described in which the NCR control signal designating the operation state of the NCR apparatus 500A is a MAC CE that is MAC layer (layer-2) signaling or DCI that is PHY layer (layer-1) signaling. However, the NCR control signal may be included in an RRC Reconfiguration message that is a type of a UE-specific RRC message to transmit to the NCR-UE 100B. The downlink signaling may be a message of a layer (for example, an NCR application) higher than the RRC layer. The downlink signaling may be transmitting a message of a layer higher than the RRC layer encapsulated with a message of a layer equal to or lower than the RRC layer. Note that the NCR-UE 100B (transmitter 120) may transmit a response message with respect to the downlink signaling from the gNB 200 in the uplink. The response message may be transmitted in response to the NCR apparatus 500A completing the configuration designated in the downlink signaling or receiving the configuration.

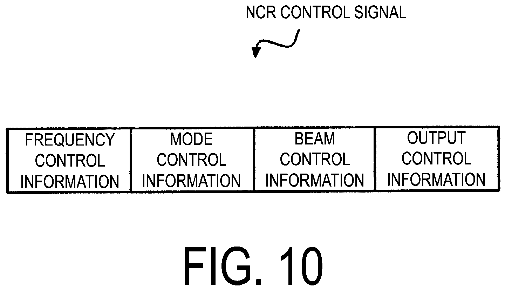

As illustrated in FIG. 10, the NCR control signal may include frequency control information to designate a center frequency of a radio signal (for example, a component carrier) to be relayed by the NCR apparatus 500A. When the NCR control signal received from the gNB 200 includes the frequency control information, the NCR-UE 100B (controller 130) controls the NCR apparatus 500A such that the NCR apparatus 500A relays a radio signal as a target whose center frequency is indicated by the frequency control information (step S2). The NCR control signal may include a plurality of pieces of frequency control information to designate center frequencies different from each other. Since the NCR control signal includes the frequency control information, the gNB 200 can designate the center frequency of the radio signal to be relayed by the NCR apparatus 500A via the NCR-UE 100B.

The NCR control signal may include mode control information to designate an operation mode of the NCR apparatus 500A. The mode control information may be associated with the frequency control information (center frequency). The operation mode may be any one of a mode in which the NCR apparatus 500A performs non-directional transmission and/or reception, a mode in which the NCR apparatus 500A performs fixed-directional transmission and/or reception, a mode in which the NCR apparatus 500A performs transmission and/or reception with a variable directional beam, and a mode in which the NCR apparatus 500A performs Multiple Input Multiple Output (MIMO) relay transmission. The operation mode may be either a beamforming mode (that is, a mode in which improvement of a desired wave is emphasized) and a null steering mode (that is, a mode in which suppression of an interference wave is emphasized). When the NCR control signal received from the gNB 200 includes the mode control information, the NCR-UE 100B (controller 130) controls the NCR apparatus 500A such that the NCR apparatus 500A operates in the operation mode indicated by the mode control information (step S2). Since the NCR control signal includes the mode control information, the gNB 200 can designate the operation mode of the NCR apparatus 500A via the NCR-UE 100B.

Here, the mode in which the NCR apparatus 500A performs non-directional transmission and/or reception is a mode in which the NCR apparatus 500A performs relay in all directions and may be referred to as an omnidirectional mode.

The mode in which the NCR apparatus 500A performs fixed-directional transmission and/or reception may be a directivity mode realized by one directional antenna. Alternatively, the mode may be a beamforming mode realized by applying fixed phase and amplitude control (antenna weight control) to a plurality of antennas. Any of these modes may be designated (configured) from the gNB 200 to the NCR-UE 100B.

The mode in which the NCR apparatus 500A performs transmission and/or reception with a variable directional beam may be a mode in which analog beamforming is performed, a mode in which digital beamforming is performed, or a mode in which hybrid beamforming is performed. The mode may be a mode for forming an adaptive beam specific to a UE 100A. Any of these modes may be designated (configured) from the gNB 200 to the NCR-UE 100B.

Note that in the operation mode in which beamforming is performed, beam control information described below may be provided from the gNB 200 to the NCR-UE 100B.

The mode in which the NCR apparatus 500A performs MIMO relay transmission may be a mode in which Single-User (SU) spatial multiplexing is performed, a mode in which Multi-User (MU) spatial multiplexing is performed, or a mode in which transmit diversity is performed. Any of these modes may be designated (configured) from the gNB 200 to the NCR-UE 100B.

The operation mode may include a mode in which relay transmission by the NCR apparatus 500A is turned on (activated) and a mode in which relay transmission by the NCR apparatus 500A is turned off (deactivated). Any of these modes may be designated (configured) from the gNB 200 to the NCR-UE 100B in the NCR control signal.

The NCR control signal may include the beam control information to designate a transmission direction, a transmission weight, or a beam pattern for the NCR apparatus 500A to perform directional transmission. The beam control information may be associated with the frequency control information (center frequency). The beam control information may include a Precoding Matrix Indicator (PMI). When the NCR control signal received from the gNB 200 includes the beam control information, the NCR-UE 100B (controller 130) controls the NCR apparatus 500A such that the NCR apparatus 500A forms a transmission directivity (beam) indicated by the beam control information (step S2). Since the NCR control signal includes the beam control information, the gNB 200 can control the transmission directivity of the NCR apparatus 500A via the NCR-UE 100B.

The NCR control signal may include output control information to designate a degree for the NCR apparatus 500A to amplify a radio signal (amplification gain) or transmission power. The output control information may be information indicating a difference value (that is, a relative value) between the current amplification gain or transmission power and the target amplification gain or transmission power. When the NCR control signal received from the gNB 200 includes the output control information, NCR-UE 100B (controller 130) controls the NCR apparatus 500A such that the NCR apparatus 500A changes the amplification gain or transmission power to that indicated by the output control information (step S2). The output control information may be associated with the frequency control information (center frequency). The output control information may be information to designate any one of an amplification gain, a beamforming gain, and an antenna gain of the NCR apparatus 500A. The output control information may be information to designate the transmission power of the NCR apparatus 500A.

When one NCR-UE 100B controls a plurality of NCR apparatuses 500A, the gNB 200 (transmitter 210) may transmit the NCR control signal for respective one of the NCR apparatuses 500A to the NCR-UE 100B. In this case, the NCR control signal may include an identifier of the corresponding NCR apparatus 500A (NCR identifier). The NCR-UE 100B (controller 130) controlling the plurality of NCR apparatuses 500A determines the NCR apparatus 500A to which the NCR control signal is applied, based on the NCR identifier included in the NCR control signal received from the gNB 200. Note that the NCR identifier may be transmitted together with the NCR control signal from the NCR-UE 100B to the gNB 200 even when the NCR-UE 100B controls only one NCR apparatus 500A.

As described above, the NCR-UE 100B (controller 130) controls the NCR apparatus 500A based on the NCR control signal from the gNB 200. This enables the gNB 200 to control the NCR apparatus 500A via the NCR-UE 100B.

### (5.2) Example of Uplink Signaling

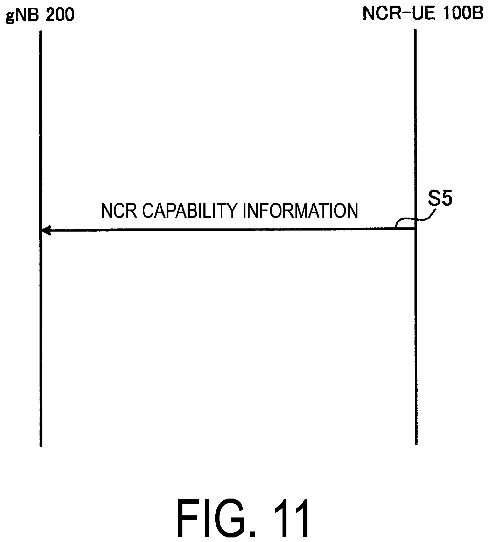

FIG. 11 is a diagram illustrating an example of the uplink signaling from the NCR-UE 100B to the gNB 200 according to the embodiment.

The NCR-UE 100B (transmitter 210) transmits uplink signaling to the gNB 200. The uplink signaling may be an RRC message that is RRC layer signaling. The uplink signaling may be a MAC CE that is MAC layer signaling. The uplink signaling may be uplink control information (UCI) that is PHY layer signaling. The uplink signaling may be a fronthaul message (e.g., F1-AP message) or an inter-base station message (e.g., Xn-AP message). The uplink signaling may be a message of a layer (for example, an NCR application) higher than the RRC layer. The uplink signaling may be transmitting a message of a layer higher than the RRC layer encapsulated with a message of a layer equal to or lower than the RRC layer. Note that the gNB 200 (transmitter 210) may transmit a response message with respect to the uplink signaling from the NCR-UE 100B in the downlink, and the NCR-UE 100B (receiver 110) may receive the response message.

For example, the NCR-UE 100B (transmitter 120) having established a wireless connection to the gNB 200 transmits the NCR capability information indicating the capability of the NCR apparatus 500A to the gNB 200 through wireless communication (step S5). The NCR-UE 100B (transmitter 120) may include the NCR capability information in a UE Capability message or a UE Assistant Information message that is a type of the RRC message to transmit to the gNB 200. The NCR-UE 100B (transmitter 120) may transmit the NCR capability information (NCR capability information and/or operation state information) to the gNB 200 in response to a request or inquiry from the gNB 200.

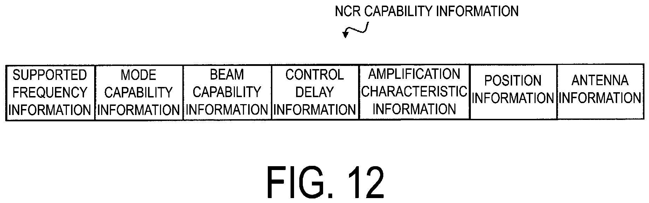

As illustrated in FIG. 12, the NCR capability information may include supported frequency information indicating a frequency supported by the NCR apparatus 500A. The supported frequency information may be a numerical value or index indicating a center frequency of the frequency supported by the NCR apparatus 500A. Alternatively, the supported frequency information may be a numerical value or index indicating a range of the frequencies supported by the NCR apparatus 500A. When the NCR capability information received from the NCR-UE 100B includes the supported frequency information, the gNB 200 (controller 230) can grasp the frequency supported by the NCR apparatus 500A, based on the supported frequency information. The gNB 200 (controller 230) may configure the center frequency of the radio signal targeted by the NCR apparatus 500A within the range of the frequencies supported by the NCR apparatus 500A.

The NCR capability information may include mode capability information relating to the operation modes or switching between the operation modes that can be supported by the NCR apparatus 500A. The operation mode may be, as described above, at least any one selected from the group consisting of a mode in which the NCR apparatus 500A performs non-directional transmission and/or reception, a mode in which the NCR apparatus 500A performs fixed-directional transmission and/or reception, a mode in which the NCR apparatus 500A performs transmission and/or reception with a variable directional beam, and a mode in which the NCR apparatus 500A performs Multiple Input Multiple Output (MIMO) relay transmission. The operation mode may be either a beamforming mode (that is, a mode in which improvement of a desired wave is emphasized) and a null steering mode (that is, a mode in which suppression of an interference wave is emphasized). The mode capability information may be information indicating which operation mode among these operation modes the NCR apparatus 500A can support. The mode capability information may be information indicating between which operation modes among these operation modes the mode switching is possible. When the NCR capability information received from the NCR-UE 100B includes the mode capability information, the gNB 200 (controller 230) can grasp the operation modes and mode switching supported by the NCR apparatus 500A, based on the mode capability information. The gNB 200 (controller 230) may configure the operation mode of the NCR apparatus 500A within a range of the grasped operation modes and mode switching.

The NCR capability information may include the beam capability information indicating a beam variable range, a beam variable resolution, or the number of variable patterns when the NCR apparatus 500A performs transmission and/or reception with a variable directional beam. The beam capability information may be, for example, information indicating a variable range of a beam angle with respect to the horizontal direction or the vertical direction (for example, control of 30° to 90° is possible) or information indicating an absolute angle. The beam capability information may be represented by a direction and/or an elevation angle at which a beam is directed. The beam capability information may be information indicating an angular change for each variable step (for example, horizontal 5°/step, vertical 10°/step). Alternatively, the beam capability information may be information indicating the number of variable steps (for example, horizontal 10 steps and vertical 20 steps). The beam capability information may be information indicating the number of variable patterns of a beam in the NCR apparatus 500A (for example, a total of 10 patterns of beam patterns 1 to 10). When the NCR capability information received from the NCR-UE 100B includes the beam capability information, the gNB 200 (controller 230) can grasp the beam angle change or beam patterns that can be supported by the NCR apparatus 500A, based on the beam capability information. The gNB 200 (controller 230) may configure a beam of the NCR apparatus 500A within a range of the grasped beam angular change or beam patterns. These pieces of beam capability information may be null capability information. For the null capability information, a null control capability when null steering is performed is indicated.

The NCR capability information may include control delay information indicating a control delay time in the NCR apparatus 500A. For example, the control delay information is information indicating a delay time (for example, 1 ms, 10 ms...) from a timing at which the UE 100 receives an NCR control signal or a timing at which the UE 100 transmits configuration completion for the NCR control signal to the gNB 200 until the UE 100 completes control (change of the operation mode or change of the beam) according to the NCR control signal. When the NCR capability information received from the NCR-UE 100B includes the control delay information, the gNB 200 (controller 230) can grasp the control delay time in the NCR apparatus 500A, based on the control delay information.

The NCR capability information may include amplification characteristic information relating to radio signal amplification characteristics or output power characteristics in the NCR apparatus 500A. The amplification characteristic information may be information indicating an amplifier gain (dB), a beamforming gain (dB), and an antenna gain (dBi) of the NCR apparatus 500A. The amplification characteristic information may be information indicating an amplification variable range (for example, 0 dB to 60 dB) in the NCR apparatus 500A. The amplification characteristic information may be information indicating the number of steps (for example, 10 steps) of the amplification degrees that can be changed by the NCR apparatus 500A or the amplification degree for each variable step (for example, 10 dB/step). The amplification characteristic information may be information indicating an output power variable range (for example, 0 dBm to 30 dBm) of the NCR apparatus 500A. The amplification characteristic information may be information indicating the number of steps (for example, 10 steps) of the output power that can be changed by the NCR apparatus 500A or the output power for each variable step (for example, 10 dBm/step).

The NCR capability information may include position information indicating an installation location of the NCR apparatus 500A. The position information may include any one or more of latitude, longitude, and altitude. The position information may include information indicating a distance and/or an installation angle of the NCR apparatus 500A with respect to the gNB 200. The installation angle may be a relative angle with respect to the gNB 200, or a relative angle with respect to, for example, north, vertical, or horizontal. The installation location may be position information of a place where the antenna unit 510a of the NCR apparatus 500A is installed.

The NCR capability information may include antenna information indicating the number of antennas included in the NCR apparatus 500A. The antenna information may be information indicating the number of antenna ports included in the NCR apparatus 500A. The antenna information may be information indicating a degree of freedom of the directivity control (beam or null formation). The degree of freedom indicates how many beams can be formed (controlled) and is usually "(the number of antennas) - 1". For example, in the case of two antennas, the degree of freedom is one. In the case of two antennas, an 8-shaped beam pattern is formed, but the directivity control can be performed only in one direction, so that the degree of freedom is one.

When the NCR-UE 100B controls a plurality of NCR apparatuses 500A, the NCR-UE 100B (transmitter 120) may transmit the NCR capability information for each NCR apparatus 500A to the gNB 200. In this case, the NCR capability information may include an identifier of the corresponding NCR apparatus 500A (NCR identifier). When the NCR-UE 100B controls a plurality of NCR apparatuses 500A, the NCR-UE 100B (transmitter 120) may transmit information indicating the respective identifiers of the plurality of NCR apparatuses 500A and/or the number of the plurality of NCR apparatuses 500A. Note that the NCR identifier may be transmitted together with the NCR capability information from the NCR-UE 100B to the gNB 200 even when the NCR-UE 100B controls only one NCR apparatus 500A.

### (5.3) General Operation Example

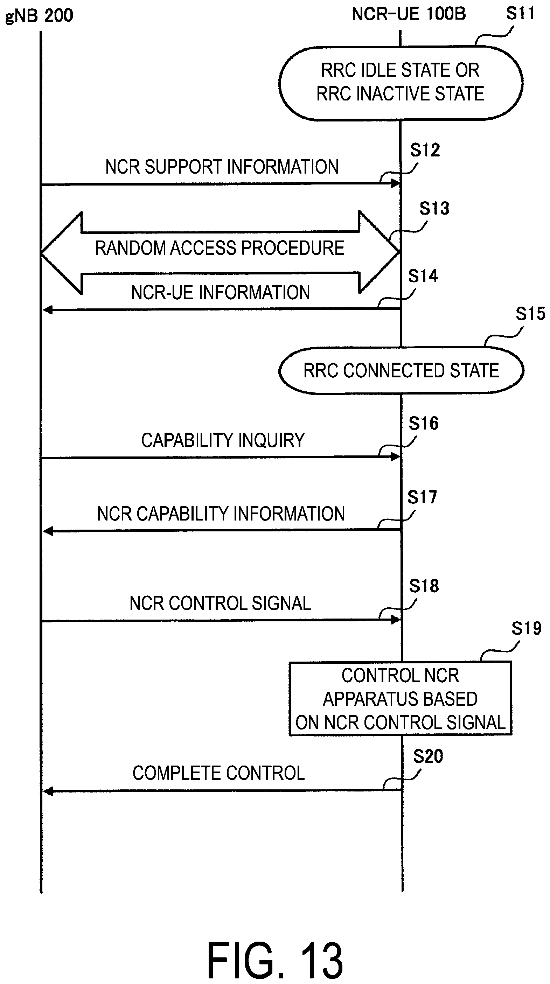

FIG. 13 is a diagram illustrating an example of an operation of the mobile communication system 1 according to the embodiment.

In step S11, the NCR-UE 100B is in the RRC idle state or the RRC inactive state.

In step S12, the gNB 200 (transmitter 210) broadcasts NCR support information indicating that the gNB 200 supports the NCR-UE 100B. For example, the gNB 200 (transmitter 210) broadcasts a system information block (SIB) including the NCR support information. The NCR support information may be information indicating that the NCR-UE 100B is accessible. The gNB 200 (transmitter 210) may broadcast NCR non-support information indicating that the gNB 200 does not support the NCR-UE 100B. The NCR non-support information may be information indicating that the NCR-UE 100B is inaccessible.

The NCR-UE 100B (controller 130) having not established a wireless connection to the gNB 200 may determine that access to the gNB 200 is permitted in response to receiving the NCR support information from the gNB 200, and may perform an access operation to establish a wireless connection to the gNB 200. The NCR-UE 100B (controller 130) may regard the gNB 200 (cell) to which access is permitted as the highest priority and perform cell reselection.

On the other hand, when the gNB 200 does not broadcast the NCR support information (or when the gNB 200 broadcasts the NCR non-support information), the NCR-UE 100B (controller 130) having not established a wireless connection to the gNB 200 may determine that access (connection establishment) to the gNB 200 is not possible. This enables the NCR-UE 100B to establish a wireless connection only to the gNB 200 capable of handling the NCR-UE 100B.

Note that when the gNB 200 is congested, the gNB 200 may broadcast access restriction information to restrict an access from the UE 100. However, unlike a normal UE 100, the NCR-UE 100B can be regarded as a network-side entity. Therefore, the NCR-UE 100B may ignore the access restriction information from the gNB 200. For example, the NCR-UE 100B (controller 130), when receiving the NCR support information from the gNB 200, may perform an operation to establish a wireless connection to the gNB 200 even if the gNB 200 broadcasts the access restriction information. For example, the NCR-UE 100B (controller 130) may not need to perform (or may ignore) Unified Access Control (UAC). Alternatively, any one or both of Access Category/Access Identity (AC/AI) used in the UAC may be a special value indicating that the access is made by the NCR-UE.

In step S13, the NCR-UE 100B (controller 130) starts a random access procedure for the gNB 200. In the random access procedure, the NCR-UE 100B (transmitter 120) transmits a random access preamble (Msg1) and an RRC message (Msg3) to the gNB 200. In the random access procedure, the NCR-UE 100B (receiver 110) receives a random access response (Msg2) and an RRC message (Msg4) from the gNB 200.

In step S14, the NCR-UE 100B (transmitter 120), when establishing a wireless connection to the gNB 200, may transmit NCR-UE information indicating that the NCR-UE 100B itself is an NCR-UE to the gNB 200. For example, the NCR-UE 100B (transmitter 120), during the random access procedure with the gNB 200, includes the NCR-UE information in the message (for example, Msg1, Msg3, Msg5) for the random access procedure to transmit to the gNB 200. The gNB 200 (controller 230) can recognize that the accessing UE 100 is the NCR-UE 100B, based on the NCR-UE information received from the NCR-UE 100B, and exclude from the access restriction target (in other words, accept the access from), for example, the NCR-UE 100B.

In step S15, the NCR-UE 100B transitions from the RRC idle state or the RRC inactive state to the RRC connected state.

In step S16, the gNB 200 (transmitter 120) transmits a capability inquiry message to inquire the capability of the NCR-UE 100B to the NCR-UE 100B. The NCR-UE 100B (receiver 110) receives the capability inquiry message.

In step S17 the NCR-UE 100B (transmitter 120) transmits a capability information message including the NCR capability information described above to the gNB 200. The gNB 200 (receiver 220) receives the capability information message. The gNB 200 (controller 230) grasps the capability of the NCR apparatus 500A based on the received capability information message.

In step S18, the gNB 200 (transmitter 120) transmits the NCR control signal designating the operation state of the NCR apparatus 500A to the NCR-UE 100B. The gNB 200 (transmitter 120) may transmit, as the NCR control signal, a MAC CE that is MAC-layer (layer-2) signaling or DCI that is PHY-layer (layer-1) signaling to the NCR-UE 100B. The NCR-UE 100B (receiver 110) receives the NCR control signal.

In step S19, the NCR-UE 100B (controller 130) controls the NCR apparatus 500A, based on the NCR control signal received from the gNB 200. The NCR-UE 100B (controller 130) may control the NCR apparatus 500A by notifying the NCR apparatus 500A (NCR controller 520A) of the NCR control signal received from the gNB 200.

In step S20, the NCR-UE 100B (transmitter 120), when completing the control of (configuration change) of the NCR apparatus 500A, may transmit a completion message to the gNB 200. Here, the NCR-UE 100B (controller 130) may determine the control completion, based on a notification (feedback) from the NCR apparatus 500A (NCR controller 520A). The gNB 200 (receiver 220) receives the completion message.

(6) Outline of beamforming control between relay apparatus and user equipment An overview of the beamforming control between the relay apparatus and the user equipment according to an embodiment will be described.

(6.1) A control terminal (NCR-UE 100B) for controlling a relay apparatus (NCR apparatus 500A) relaying a radio signal between a base station (gNB 200) and a user equipment (UE 100A) in a mobile communication system (mobile communication system 1) includes a receiver (receiver 110) receiving, from the base station, configuration information used by the relay apparatus to direct a beam to the user equipment, and a controller (controller 130) controlling the relay apparatus to direct the beam to the user equipment, based on the configuration information.

The configuration information as described above is another example of the above-described downlink signaling. The configuration information may be information included in the above-described downlink signaling. Although details will be described below, the relay apparatus is not limited to the NCR apparatus, and may be a Reconfigurable Intelligent Surface (RIS) apparatus. The control terminal is not limited to the NCR-UE, but may be an RIS-UE. In the following embodiments, an example will be mainly described in which a relay apparatus is an NCR apparatus and a control terminal is an NCR-UE.

(6.2) In (6.1) described above, the configuration information may include resource configuration information indicating a resource used for the control terminal to receive an uplink signal from the user equipment, the receiver may receive the uplink signal from the user equipment by using the resource indicated by the resource configuration information, and the controller may control the relay apparatus to direct the beam to the user equipment according to the received uplink signal.

(6.3) In (6.2) described above, the controller may estimate a channel state between the control terminal and the user equipment by using the received uplink signal, and control the relay apparatus to direct the beam to the user equipment according to the estimated channel state.

(6.4) In (6.2) described above, the uplink signal may include beam control information, and the controller may acquire the beam control information included in the received uplink signal and control the relay apparatus to direct the beam to the user equipment according to the acquired beam control information.

(6.5) In any one of (6.2) to (6.4) described above, the receiver may receive, from the base station, a Radio Resource Control (RRC) message including the resource configuration information.

(6.6) In any one of (6.2) to (6.5) described above, the resource configuration information may include at least one selected from the group consisting of Physical Uplink Control Channel (PUCCH) configuration information indicating a configuration of a PUCCH of the user equipment, Physical Uplink Shared Channel (PUSCH) configuration information indicating a configuration of a PUSCH of the user equipment, Sounding Reference Signal (SRS) configuration information indicating a configuration of an SRS of the user equipment, and a Cell Radio Network Temporary Identifier (C-RNTI) assigned to the user equipment.

(6.7) In (6.1) described above, the configuration information may include mode configuration information used to switch a control mode related to beamforming between a plurality of control modes, and the controller may control the relay apparatus to direct the beam to the user equipment by using the control mode configured according to the mode configuration information.

(6.8) In (6.7) described above, the plurality of control modes may include a base station control mode in which the control terminal controls the relay apparatus according to control from the base station.

(6.9) In (6.7) or (6.8) described above, the plurality of control modes may include an autonomous control mode in which the control terminal autonomously controls the relay apparatus without depending on the control from the base station.

(6.10) In any one of (6.7) to (6.9) described above, the plurality of control modes may further include a hybrid control mode in which the control from the base station and autonomous control of the control terminal are used in combination.

(6.11) In any one of (6.7) to (6.10) described above, the plurality of control modes may further include a beam sweeping control mode in which a beam direction of the relay apparatus is sequentially switched.

(6.12) In any one of (6.7) to (6.11) described above, the receiver may receive, from the base station, a Radio Resource Control (RRC) message including the mode configuration information, a Medium Access Control (MAC) Control Element (CE) including the mode configuration information, or Downlink Control Information (DCI) including the mode configuration information.

(6.13) In any one of (6.7) to (6.12) described above, the mode configuration information may include information used to switch any one of a control mode of the beamforming of the relay apparatus, a control mode of timing switching of the relay apparatus, and a control mode of on/off control of the relay apparatus.

(6.14) In any one of (6.7) to (6.13) described above, the mode configuration information may include information designating timing of switching of the control information.

(6.15) A base station used in a mobile communication system (mobile communication system 1) including a control terminal (NCR-UE 100B) that controls a relay apparatus (NCR apparatus 500A) that relays a radio signal between the base station (gNB 200) and a user equipment (UE 100A) includes a transmitter (transmitter 210) that transmits, to the control terminal, configuration information used by the relay apparatus to direct a beam to the user equipment.

(6.16) A communication method executed by a control terminal (NCR-UE 100B) that controls a relay apparatus (NCR apparatus 500A) that relays a radio signal between a base station (gNB 200) and a user equipment (UE 100A) in a mobile communication system (mobile communication system 1) includes the steps of receiving, from the base station, configuration information used by the relay apparatus to direct a beam to the user equipment; and controlling the relay apparatus to direct the beam to the user equipment, based on the configuration information.

### (7) Operation Example Related to Beamforming Between Relay Apparatus and User Equipment

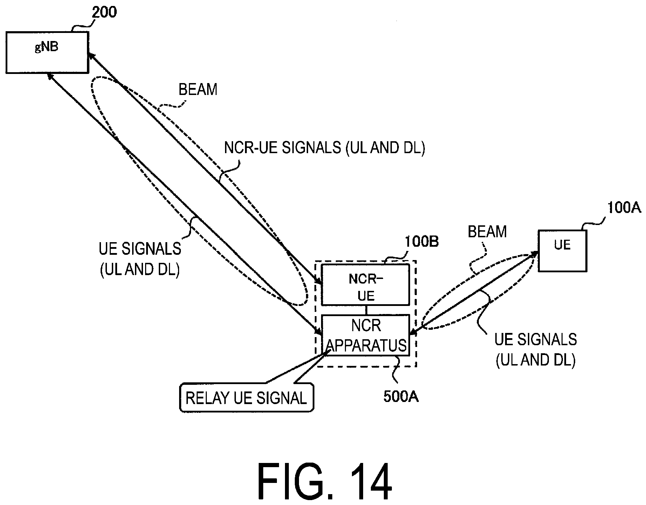

Next, an operation example related to beamforming between the relay apparatus and the user equipment according to the embodiment will be described with reference to FIG. 14.

As illustrated in FIG. 14, the NCR apparatus 500A relays radio signals (referred to as "UE signal") transmitted and received between the gNB 200 and the UE 100A. The UE signal includes an uplink signal transmitted from the UE 100A to the gNB 200 (referred to as "UE-UL signal") and a downlink signal transmitted from the gNB 200 to the UE 100A (referred to as "UE-DL signal"). The NCR apparatus 500A relays the UE-UL signal from the UE 100A to the gNB 200 and relays the UE-DL signal from the gNB 200 to the UE 100A.

The NCR-UE 100B transmits and receives radio signals (referred to herein as "NCR-UE signals") to and from the gNB 200. The NCR-UE signal includes an uplink signal transmitted from the NCR-UE 100B to the gNB 200 (referred to as an "NCR-UE-UL signal") and a downlink signal transmitted from the gNB 200 to the NCR-UE 100B (referred to as an "NCR-UE-DL signal"). The NCR-UE-UL signal includes the uplink signaling described above. The NCR-UE-DL signal includes the downlink signaling described above.

The gNB 200 directs a beam to the NCR-UE 100B, based on the NCR-UE-UL signal from the NCR-UE 100B. The NCR apparatus 500A and the NCR-UE 100B are co-located, and thus directing, by the gNB 200, a beam to the NCR-UE 100B results in directing the beam to both the NCR-UE 100B and the NCR apparatus 500A. The gNB 200 transmits the NCR-UE-DL signal and the UE-DL signal using the beam. The NCR-UE 100B receives the NCR-UE-DL signal. Note that the NCR apparatus 500A and the NCR-UE 100B may be at least partially integrated together. For example, in the NCR apparatus 500A and NCR-UE 100B, functionalities (e.g., antennas) for transmitting and receiving or relaying UE signals and/or NCR-UE signals are integrated together.

The problem here is how the NCR apparatus 500A directs a beam to the UE 100A. In an embodiment, the NCR-UE 100B receives, from the gNB 200, configuration information used by the NCR apparatus 500A to direct a beam towards the UE 100A. The configuration information is downlink signaling included in the NCR-UE-DL signal. The NCR-UE 100B controls the NCR apparatus 500A to direct a beam to the UE 100A, based on the configuration information. This facilitates smooth direction, by the NCR apparatus 500A, of the beam to the UE 100A. Hereinafter, a first operation pattern and a second operation pattern related to the beamforming control as described above will be described.

### (7.1) First Operation Pattern

In the present first operation pattern, the configuration information transmitted from the gNB 200 to the NCR-UE 100B includes resource configuration information indicating resources necessary for the NCR-UE 100B to receive the UE-UL signal from the UE 100A. The NCR-UE 100B receives the UE-UL signal from the UE 100A by using the resource indicated by the resource configuration information, and controls the NCR apparatus 500A to direct a beam to the UE 100A according to the received UE-UL signal.

For example, the NCR-UE 100B uses the received UE-UL signal to estimate the channel state between the NCR-UE 100B and the UE 100A. The NCR-UE 100B may estimate the channel state using a reference signal included in the UE-UL signal. The reference signal may be the SRS. Alternatively, the reference signal may be a demodulation reference signal (DMRS) included in the PUSCH (and the PUCCH). The estimation of the channel state may include estimation of the direction of arrival and/or the distance of arrival of the UE-UL signal. The NCR-UE 100B controls the NCR apparatus 500A to direct the beam toward the UE 100A according to the estimated channel state.

The resource configuration information transmitted from the gNB 200 to the NCR-UE 100B may include at least one selected from the group consisting of PUCCH configuration information indicating a PUCCH configuration of the UE 100A, PUSCH configuration information indicating a PUSCH configuration of the UE 100A, SRS configuration information indicating an SRS configuration of the UE 100A, and a C-RNTI assigned to the UE 100A.

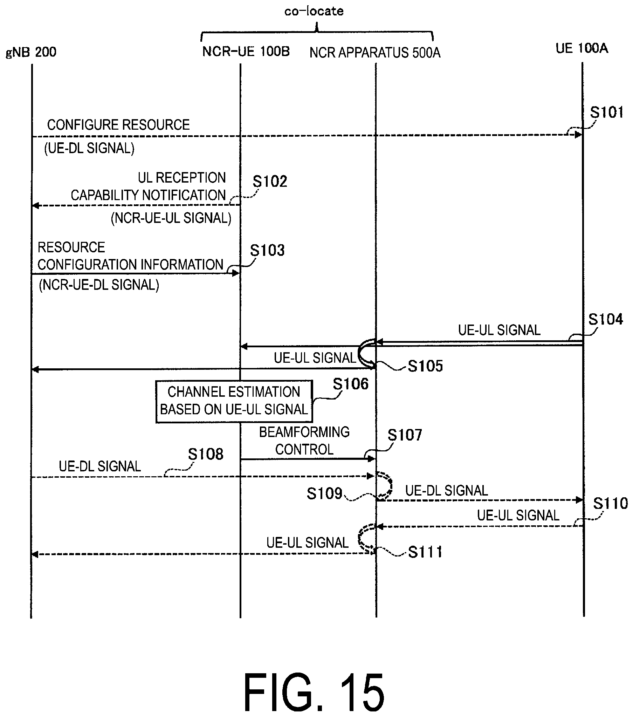

FIG. 15 is a diagram illustrating an example of an operation flow of the present first operation pattern. In FIG. 15, dashed lines indicate non-essential steps.

In step S101, the gNB 200 establishes an RRC connection to the UE 100A, and configures the UE 100A with various resources (for example, a PUCCH resource, a PUSCH resource, an SRS resource, and a C-RNTI) for the UE 100A. At this stage, relay transmission by the NCR apparatus 500A may not need to be performed. Alternatively, configuration of the UE 100A with various resources by gNB 200 may not need to be performed at this stage but may be performed in steps S108 to S109 described below.

In step S102, the NCR-UE 100B transmits, to the gNB 200, a capability notification (NCR capability information) indicating that the NCR-UE 100B has an uplink reception capability. The gNB 200 receives the capability notification (NCR capability information).

In step S103, the gNB 200 transmits a message to the NCR-UE 100B, the message including resource configuration information indicating resources used for the NCR-UE 100B to receive the UE-UL signal from the UE 100A. The NCR-UE 100B receives the message. The message may be the same as and/or similar to the above-described downlink signaling. For example, the message may be RRC Reconfiguration, MAC CE, or DCI. The resource configuration information includes at least one of the information elements (A1) to (A4) described below.

### (A1) PUCCH Configuration

The PUCCH configuration is an information element indicating a configuration of a PUCCH resource for the UE 100A. By acquiring such a PUCCH configuration by the NCR-UE 100B, the NCR-UE 100B can receive (and demodulate and decode) the PUCCH of the UE 100A. For example, the NCR-UE 100B uses, for channel estimation, a reference signal included in the PUCCH. The NCR-UE 100B may acquire beam control information (for example, a Precoding Matrix Indicator (PMI)) included in the PUCCH. An example of acquiring beam control information will be described below.

### (A2) PUSCH Configuration

The PUSCH configuration is an information element indicating a configuration of a PUSCH resource for the UE 100A. By acquiring such a PUSCH configuration by the NCR-UE 100B, the NCR-UE 100B can receive (and demodulate and decode) the PUSCH of the UE 100A. For example, the NCR-UE 100B uses, for channel estimation, a reference signal included in the PUSCH.

### (A3) SRS Configuration

The PUSCH configuration is an information element indicating a configuration of an SRS resource of the UE 100A. By acquiring such an SRS configuration by the NCR-UE 100B, the NCR-UE 100B can receive (and demodulate) the SRS of the UE 100A. The NCR-UE 100B uses the SRS for channel estimation.

### (A4) C-RNTI

The C-RNTI is a temporary identifier that the gNB 200 assigns to the UE 100A. The C-RNTI may be used when the NCR-UE 100B receives (and demodulates) signals of the above-described channels (e.g., PUCCH and PUSCH). Accordingly, when the NCR-UE 100B acquires the C-RNTI of the UE 100A, the signals of the channels described above can be smoothly received (and demodulated).

In step S104, the UE 100A transmits the UE-UL signal. The NCR apparatus 500A receives the UE-UL signal. The UE-UL signal includes at least one selected from the group consisting of the PUCCH, the PUSCH, and the SRS. Here, the NCR-UE 100B receives the UE-UL signal, based on the resource configuration information received from the gNB 200 in step S103.

In step S105, the NCR apparatus 500A relays (transfers), to the gNB 200, the UE-UL signal received from the UE 100A in step S104. The gNB 200 receives the relayed UE-UL signal. The gNB 200 performs channel estimation, based on the received UE-UL signal and determines an antenna weight with which a beam is directed to the NCR-UE 100B (i.e., the NCR apparatus 500A). The antenna weight may be referred to as a precoding matrix.

In step S106, the NCR-UE 100B performs channel estimation, based on the UE-UL signal received from the UE 100A in step S104.

In step S107, the NCR-UE 100B controls the beam of the NCR apparatus 500A by using the channel estimation result in step S106 (beamforming control). For example, the NCR-UE 100B determines an antenna weight with which the beam is directed to the UE 100A and configures the NCR apparatus 500A with the antenna weight.

In step S108, the gNB 200 transmits the UE-DL signal to the NCR-UE 100B (NCR apparatus 500A) while directing the beam to the NCR-UE 100B. The NCR apparatus 500A receives the UE-DL signal.

In step S109, the NCR apparatus 500A relays (transfers), to the UE 100A, the UE-DL signal received from the gNB 200 in step S108. Here, the NCR apparatus 500A transmits the UE-DL signal while directing the beam to the S107 according to the beamforming control in step UE 100A.

In step S110, the UE 100A transmits the UE-UL signal. The NCR apparatus 500A receives the UE-UL signal. The NCR apparatus 500A may receive the UE-UL signal using the antenna weight configured in step S107 (i.e., the directivity configured in step S107).

In step S111, the NCR apparatus 500A relays (transfers), to the gNB 200, the UE-UL signal received from the UE 100A in step S104. The gNB 200 receives the relayed UE-UL signal.

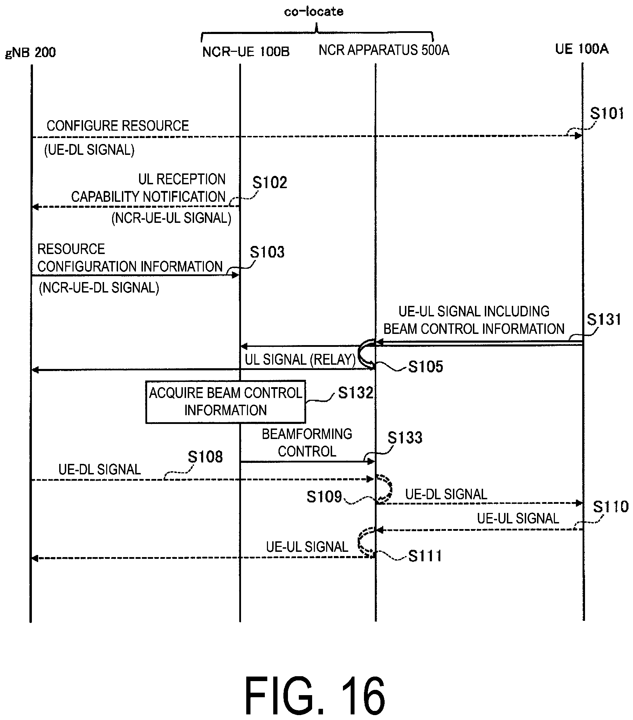

FIG. 16 illustrates another example of the operation flow of the first operation pattern. In FIG. 16, dashed lines indicate non-essential steps. Here, the difference from the operation in FIG. 15 will be described.

In step S103, the gNB 200 transmits a message to the NCR-UE 100B, the message including resource configuration information indicating resources used for the NCR-UE 100B to receive the UE-UL signal from the UE 100A. The NCR-UE 100B receives the message. The message may include channel state information between the gNB 200 and the NCR apparatus 500A and/or antenna weight information (precoding matrix information) of the gNB 200 in addition to at least one of the information elements (A1) to (A4) described above.

In step S131, the UE 100A transmits the UE-UL signal including the beam control information. The NCR apparatus 500A receives the UE-UL signal. The NCR-UE 100B receives the UE-UL signal, based on the resource configuration information received from the gNB 200 in step S103. The UE-UL signal may be the PUCCH. The PUCCH may include the PMI as beam control information. The beam control information is information based on a result of channel estimation performed on the UE 100A side. To be more specific, the beam control information is information reflecting the channel state between gNB 200 and UE 100A (including the NCR apparatus 500A). The beam control information may be information indicating the antenna weight at which the beam is directed from the NCR apparatus 500A to the UE 100A.

In step S132, the NCR-UE 100B acquires the antenna weight information included in the UE-UL signal received from the UE 100A in step S131.

In step S133, the NCR-UE 100B controls the beam of the NCR apparatus 500A using the antenna weight information acquired in step S132 (beamforming control). For example, the NCR-UE 100B configures the NCR apparatus 500A with the antenna weight indicated by the antenna weight information. When the antenna weight information indicates the channel state between gNB 200 and UE 100A, the NCR-UE 100B may derive the channel state between the NCR apparatus 500A and the UE 100A also in consideration of the channel state transmitted from the gNB 200 in step S103 (i.e., the channel state between the gNB 200 and the NCR apparatus 500A). The NCR-UE 100B determines the antenna weight with which a beam is directed to the UE 100A using the derived channel state, and configures the NCR apparatus 500A with the antenna weight.

The other operations in FIG. 16 are the same as and/or similar to those in FIG. 15.

In the first operation pattern, an example has been described in which one UE 100A is a relay target of NCR apparatus 500A, but there may be a plurality of UE 100A as relay targets of NCR apparatus 500A. The NCR-UE 100B may perform the operation of the first operation pattern for each of the plurality of UEs 100A. The gNB 200 may transmit, in step S103, a message to the NCR-UE 100B including resource configuration information for each of the plurality of UEs 100A.

Here, in the message, an index may be assigned to the resource configuration information for each of the plurality of UEs 100A. After transmitting the resource configuration information in step S103, the gNB 200 may transmit, to the NCR-UE 100B, an activation command (e.g., DCI or MAC CE) including an index designating the resource configuration information to be actually applied. The NCR-UE 100B may apply the resource configuration information designated by the index in response to receiving the activation command.

A case may be assumed in which a plurality of UEs 100A as relay targets of the NCR apparatus 500A are present, and the plurality of UEs 100A are close to each other. In such a case, the NCR-UE 100B may perform the operation of the first operation pattern for one UE 100A as a representative of the plurality of UE 100A. The gNB 200 may transmit, to the NCR-UE 100B in step S103, a message including the resource configuration information for the one UE 100A.

### (7.2) Second Operation Pattern

In the second operation pattern, the configuration information transmitted from the gNB 200 to the NCR-UE 100B includes mode configuration information used to switch the control mode related to beamforming between the plurality of control modes. The NCR-UE 100B controls the NCR apparatus 500A to direct the beam to the UE 100A by using the control mode configured according to the mode configuration information. Such mode configuration information may be transmitted by the RRC message, the MAC CE, or the DCI. The mode configuration information may be information indicating, to the NCR-UE 100B, the control mode used after switching. Alternatively, the mode configuration information may be information permitting a specific control mode for the NCR-UE 100B.

The plurality of control modes may be two or more of a "gNB control mode" in which the NCR-UE 100B controls the NCR apparatus 500A according to the control from the gNB 200, an "autonomous control mode" in which the NCR-UE 100B autonomously controls the NCR apparatus 500A regardless of the control from the gNB 200, a "hybrid control mode" in which the control from the gNB 200 and the autonomous control of the NCR-UE 100B are used in combination, and a "beam sweeping control mode" in which the beam direction of the NCR apparatus 500A is sequentially switched.

The "gNB control mode" is a mode in which the NCR-UE 100B controls the NCR apparatus 500A, based on the specific control from the gNB 200. In the "gNB control mode", for example, the gNB 200 sequentially indicates, to the NCR-UE 100B, the beam (antenna weight) to be applied to the NCR-UE 100B by the DCI or the MAC CE.

The "autonomous control mode" is a mode in which the gNB 200 provides no specific control and the NCR-UE 100B autonomously controls the NCR apparatus 500A. In the "autonomous control mode", for example, the NCR-UE 100B determines the beam (antenna weight) to be applied to the NCR-UE 100B, and the NCR-UE 100B performs beam control of the NCR apparatus 500A. The above-described first operation pattern can be considered as a type of "autonomous control mode". In the "autonomous control mode", the NCR-UE 100B may estimate the position of the UE 100A using a sensor such as a proximity radar, and perform beam control of the NCR apparatus 500A according to the estimated position.

The "hybrid control mode" is a mode in which gNB 200 performs rough control on the NCR apparatus 500A, and the NCR-UE 100B autonomously performs specific control on the NCR apparatus 500A. In the "hybrid control mode", for example, the gNB 200 designates a beam direction (directivity direction) in increments of 45 degrees, and the NCR-UE 100B autonomously performs fine adjustment in increments of 45 degrees ± 5 degrees.

The "beam sweeping control mode" is a mode in which the NCR-UE 100B sequentially switches the beam direction of the NCR apparatus 500A. For example, the NCR apparatus 500A sequentially switches the beam direction in such a manner as to horizontally rotate the beam by 360°. The UE 100A detects and responds to a signal from the NCR apparatus 500A in any beam direction. As a result, the direction in which the UE 100A is located can be estimated. Once the direction in which the UE 100A is located is estimated, the gNB 200 may switch the NCR-UE 100B to the "autonomous control mode".

Although an example has been described here in which the mode configuration information includes information elements used to switch the "beamforming control mode" of the NCR apparatus 500A, the information elements may be used for switching other control modes. For example, the mode configuration information may include an identifier indicating which one of the "beamforming control mode", the "timing switching control mode", and the "on/off control mode" is to be applied. "Timing switching" is, for example, switching of timing between uplink and downlink in TDD (Time Division Duplex). The "on/off control" is, for example, switching the operation of the NCR apparatus 500A between stop (off) and start (on).

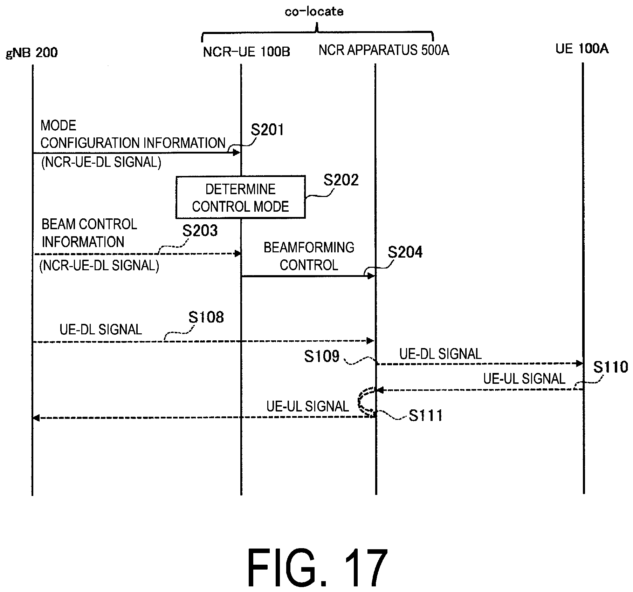

FIG. 17 is a diagram illustrating an example of an operation flow of the second operation pattern. In FIG. 17, dashed lines indicate non-essential steps.

In step S201, the gNB 200 transmits, to the NCR-UE 100B, a message including mode configuration information used to switch the control mode related to beamforming between the plurality of control modes. The NCR-UE 100B receives the message. The message may be the same as and/or similar to the above-described downlink signaling. For example, the message may be RRC Reconfiguration, MAC CE, or DCI. The mode configuration information includes at least one of the information elements (B1) to (B3) described below.

### (B1) Identifier Indicating Application Target

The identifier indicates, for example, any one of the "beamforming control mode", the "timing switching control mode", and the "on/off control mode".

### (B2) Mode Identifier

The identifier indicates, for example, one of the "gNB control mode", the "autonomous control mode", the "hybrid control mode", and the "beam sweeping control mode". Note that the present embodiment is not limited to designating the control mode by such an explicit identifier, and the NCR-UE 100B may determine the control mode, based on a configuration from the gNB 200. In other words, the gNB 200 may implicitly indicate the control mode to the NCR-UE 100B. For example, the NCR-UE 100B may determine that the control mode is the gNB control mode when various configurations are made for the gNB control mode, and may determine that the control mode is the autonomous control mode when various configurations are made for the autonomous control mode.

### (B3) Timing Information

The timing information indicates, by a period, a slot number, or the like, a timing at which the control mode indicated by the mode identifier is applied or permitted to be applied. When the period is designated, periodic mode switching is enabled.

In step S202, the NCR-UE 100B determines the control mode, based on the mode configuration information received from the gNB 200 in step S201. For example, the NCR-UE 100B may switch the "beamforming control mode" between the "gNB control mode" and the "autonomous control mode".

In the case of the "gNB control mode", in step S203, the gNB 200 transmits, to the NCR-UE 100B, beam control information used to control the beam of the NCR-UE 100B. The NCR-UE 100B receives the beam control information.

In step S204, the NCR-UE 100B controls the beam of the NCR apparatus 500A according to the control mode determined in step S202 (beamforming control). The subsequent operations are same as, and/or similar to, those of the first operation pattern described above.

### (8) Variations of Relay Apparatus and Control Terminal

The embodiment described above describes the example in which the relay apparatus relaying the radio signals between the gNB 200 and the UE 100 (UE 100A) is the repeater apparatus (NCR apparatus 500A) that amplifies and transfers the received radio signals. However, the relay apparatus relaying the radio signals between the gNB 200 and the UE 100 (UE 100A) may be a Reconfigurable Intelligent Surface (RIS) apparatus that changes a propagation direction of an incident radio wave (radio signal) by reflection or refraction. The "NCR" in the above-described embodiments may be read as the "RIS". The RIS can perform beamforming (directivity control) in the same and/or similar way as the NCR by changing the characteristics of metamaterials. In the case of the RIS, by controlling the reflection direction and the refraction direction of each unit element, the range (distance) of the beam may be changeable as in the case of lenses. For example, the configuration may allow the reflection direction and refraction direction of each unit element to be controlled and allow a near UE to be focused on (directing the beam to the near UE) or a far UE to be focused on (directing the beam to be far UE).

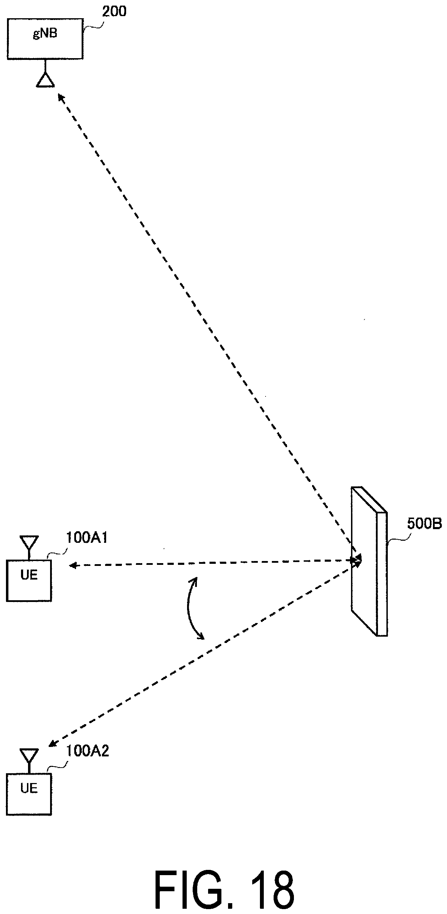

An RIS apparatus 500B illustrated in FIG. 18 is a reflective RIS apparatus 500B. Such an RIS apparatus 500B reflects an incident radio wave to change the propagation direction of the radio wave. Here, a reflection angle of the radio wave can be variably configured. The RIS apparatus 500B reflects radio waves incident from the gNB 200 toward each of the UE 100A1 and the UE 100A2. The RIS apparatus 500B may reflect a radio wave incident from each of the UE 100A1 and the UE 100A2 toward the gNB 200. The RIS apparatus 500B dynamically changes a reflection angle of a radio wave. For example, in a communication resource between the gNB 200 and the UE 100A1, the RIS apparatus 500B reflects a radio wave incident from the gNB 200 toward the UE 100A1 and/or reflects a radio wave incident from the UE 100A1 toward the gNB 200. Here, the communication resource includes a time direction resource and/or a frequency direction resource. In a communication resource between the gNB 200 and the UE 100A2, the RIS apparatus 500B reflects a radio wave incident from the gNB 200 toward the UE 100A2 and/or reflects a radio wave incident from the UE 100A2 toward the gNB 200.

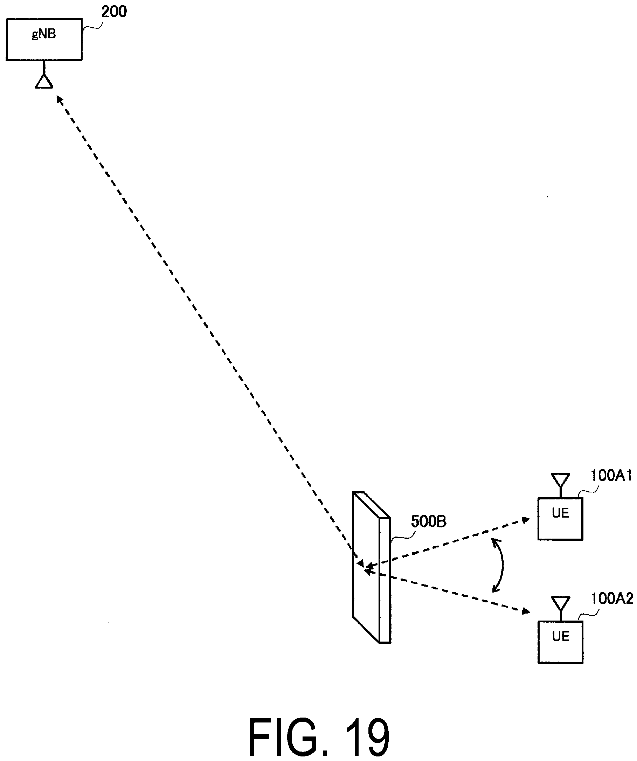

The RIS apparatus 500B illustrated in FIG. 19 is a transmissive RIS apparatus 500B. Such an RIS apparatus 500B refracts an incident radio wave to change the propagation direction of the radio wave. Here, a refraction angle of the radio wave can be variably configured. The RIS apparatus 500B refracts radio waves incident from the gNB 200 toward each of the UE 100A1 and the UE 100A2. The RIS apparatus 500B may refract a radio wave incident from each of the UE 100A1 and the UE 100A2 toward the gNB 200. The RIS apparatus 500B dynamically changes the refraction angle of a radio wave. For example, in a communication resource between the gNB 200 and the UE 100A1, the RIS apparatus 500B refracts a radio wave incident from the gNB 200 toward the UE 100A1 and/or refracts a radio wave incident from the UE 100A1 toward the gNB 200. In a communication resource between the gNB 200 and the UE 100A2, the RIS apparatus 500B refracts a radio wave incident from the gNB 200 toward the UE 100A2 and/or refracts a radio wave incident from the UE 100A2 toward the gNB 200.

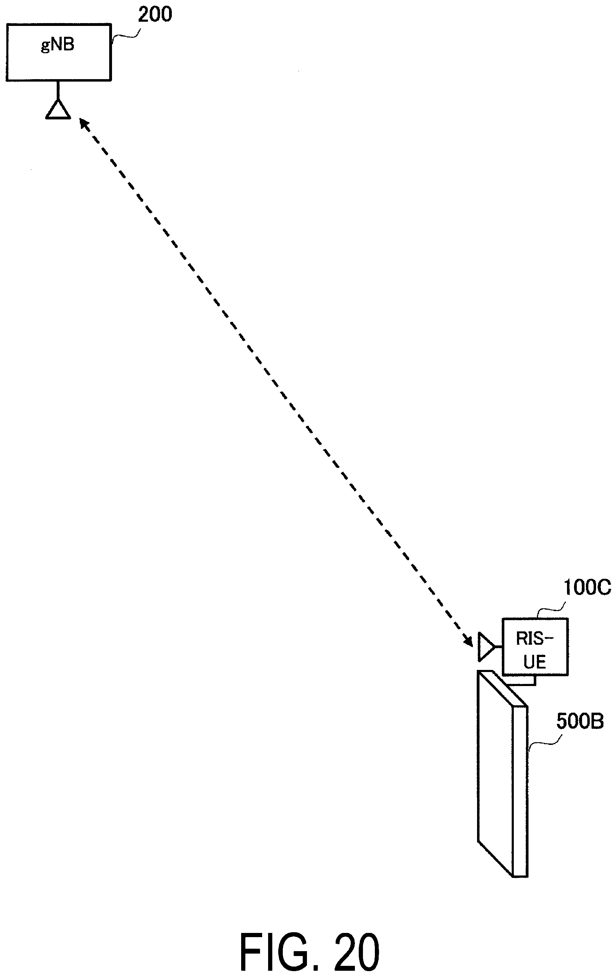

As illustrated in FIG. 20, a new UE (hereinafter referred to as a "RIS-UE") 100C is introduced that is a type of the control terminal for controlling the RIS apparatus 500B. The RIS-UE 100C controls the RIS apparatus 500B in cooperation with the gNB 200 by establishing a wireless connection to the gNB 200 and performing wireless communication with the gNB 200. This can realize efficient coverage extension using the RIS apparatus 500B while suppressing the increase in the installation cost and the decrease in the degree of freedom of the installation of the RIS apparatus 500B. The RIS-UE 100C controls the RIS apparatus 500B in accordance with an RIS control signal from the gNB 200.

The RIS-UE 100C may be configured separately from the RIS apparatus 500B. For example, the RIS-UE 100C may be located near the RIS apparatus 500B and may be electrically connected to the RIS apparatus 500B. The RIS-UE 100C may be connected to the RIS apparatus 500B by wire or wireless. The RIS-UE 100C may be configured integrally with the RIS apparatus 500B. The RIS-UE 100C and the RIS apparatus 500B may be fixedly installed on a wall surface or a window, for example. The RIS-UE 100C and the RIS apparatus 500B may be installed in, for example, a vehicle to be movable. One RIS-UE 100C may control a plurality of RIS apparatuses 500B.

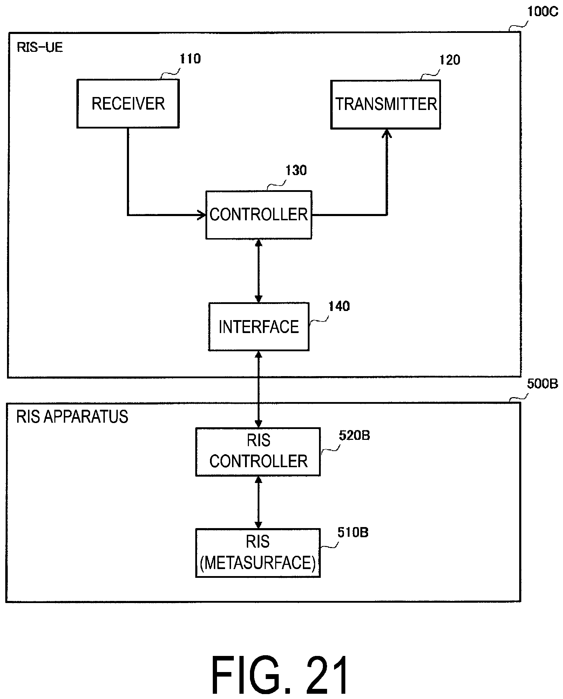

FIG. 21 is a diagram illustrating configurations of the RIS-UE 100C and the RIS apparatus 500B according to the present variation. As illustrated in FIG. 21, the RIS-UE 100C includes the receiver 110, the transmitter 120, the controller 130, and the interface 140. The configuration like this is the same as, and/or similar to, that in the embodiment described above.

The RIS apparatus 500B includes a RIS 510B and a RIS controller 520B. The RIS 510B is a metasurface configured using metamaterials. For example, the RIS 510B is configured by arranging very small structures in an array form with respect to a wavelength of a radio wave, in which a direction and beam shape of a reflected wave can be arbitrarily designed by forming the structures in different shapes depending on an arrangement location. The RIS 510B may be a transparent dynamic metasurface. The RIS 510B may be configured by stacking a transparent glass substrate on a metasurface substrate on which a large number of small structures are regularly arranged and which is made transparent, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate.

The RIS controller 520B controls the RIS 510B in response to a RIS control signal from the controller 130 in the RIS-UE 100C. The RIS controller 520B may include at least one processor and at least one actuator. The processor interprets a RIS control signal from the controller 130 in the RIS-UE 100C to drive the actuator in response to the RIS control signal. Note that when the RIS-UE 100C and the RIS apparatus 500B are integrally configured, the controller 130 in the RIS-UE 100C and the RIS controller 520B in the RIS apparatus 500B may also be integrally configured.

### (9) Other Embodiments

The NCR/RIS control information transmitted from the gNB 200 to the NCR-UE 100B or the RIS-UE 100C may be information used to control the direction or the focal distance of the beam relayed (output) by the NCR apparatus 500A or the RIS apparatus 500B. The information used to control the direction is, for example, the antenna weight as described above. The information used to control the focal distance is information used for the NCR apparatus 500A or the RIS apparatus 500B to focus the beam in accordance with the distance between the NCR apparatus 500A or the RIS apparatus 500B and the UE 100A. Such information may be information indicating the distance between the NCR apparatus 500A or the RIS apparatus 500B and the UE 100A. Alternatively, such information may be information indicating the focal distance (for example, a focal range such as a nearby place or a far place). Based on this information, the NCR apparatus 500A or the RIS apparatus 500B adjusts the focal distance of the beam. In the case of the RIS apparatus 500B, the focal distance of the beam is adjusted as in the case of lenses by controlling the reflection (or refraction) angle of elements outside a metasurface and the reflection (or refraction) angle of elements inside the metasurface at different angles (making a difference between the reflection (or refraction) angles).

In the above embodiments, the frequency control information may include a cell ID identifying a cell and/or a BWP ID identifying a bandwidth part (BWP). The BWP is a part of a frequency band of a cell.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

In the embodiment described above, an example in which the base station is an NR base station (i.e., a gNB) is described; however, the base station may be an LTE base station (i.e., an eNB). The base station may be a relay node such as an Integrated Access and Backhaul (IAB) node. The base station may be a Distributed Unit (DU) of the IAB node.

A program causing a computer to execute each of the processes performed by the UE 100 (NCR-UE 100B, RIS-UE 100C) or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, System on a chip (SoC)).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2022-071094 (filed on April 22, 2022), the contents of which are incorporated herein by reference in their entirety.

### Supplementary Note

Features relating to the embodiments described above are described below as supplements.
(1) A control terminal that controls a relay apparatus that relays a radio signal between a base station and a user equipment in a mobile communication system, the control terminal including:
   a receiver that receives, from the base station, configuration information used by the relay apparatus to direct a beam to the user equipment; and
   a controller that controls the relay apparatus to direct the beam to the user equipment, based on the configuration information.
(2)
   The control terminal according to (1) above, wherein
   the configuration information includes resource configuration information indicating a resource used for the control terminal to receive an uplink signal from the user equipment, and
   the receiver receives the uplink signal from the user equipment by using the resource indicated by the resource configuration information, and
   the controller controls the relay apparatus to direct the beam to the user equipment according to the received uplink signal.
(3) The control terminal according to (1) or (2) above, wherein the controller
   estimates a channel state between the control terminal and the user equipment by using the received uplink signal, and
   controls the relay apparatus to direct the beam to the user equipment according to the estimated channel state.
(4) The control terminal according to (2) or (3) above, wherein
   the uplink signal includes beam control information, and
   the controller
   acquires the beam control information included in the received uplink signal, and controls the relay apparatus to direct the beam to the user equipment according to the acquired beam control information.
(5) The control terminal according to any one of (2) to (4) above, wherein the receiver receives, from the base station, a Radio Resource Control (RRC) message including the resource configuration information.
(6) The control terminal according to any one of (2) to (5) above, wherein
   the resource configuration information includes at least one selected from the group consisting of Physical Uplink Control Channel (PUCCH) configuration information indicating a configuration of a PUCCH of the user equipment, Physical Uplink Shared Channel (PUSCH) configuration information indicating a configuration of a PUSCH of the user equipment, Sounding Reference Signal (SRS) configuration information indicating a configuration of an SRS of the user equipment, and a Cell Radio Network Temporary Identifier (C-RNTI) assigned to the user equipment.
(7) The control terminal according to any one of (1) to (6) above, wherein
   the configuration information includes mode configuration information used to switch a control mode related to beamforming among a plurality of control modes, and
   the controller controls the relay apparatus to direct the beam to the user equipment by using the control mode configured according to the mode configuration information.
(8) The control terminal according to (7) above, wherein the plurality of control modes include a base station control mode in which the control terminal controls the relay apparatus according to control from the base station.
(9) The control terminal according to (7) or (8) above, wherein the plurality of control modes include an autonomous control mode in which the control terminal autonomously controls the relay apparatus without depending on the control from the base station.
(10) The control terminal according to any one of (7) to (9) above, wherein the plurality of control modes further include a hybrid control mode in which the control from the base station and the autonomous control of the control terminal are used in combination.
(11) The control terminal according to any one of (7) to (10) above, wherein the plurality of control modes further include a beam sweeping control mode in which a beam direction of the relay apparatus is sequentially switched.
(12) The control terminal according to any one of (7) to (11) above, wherein the receiver receives, from the base station, a Radio Resource Control (RRC) message including the mode configuration information, a Medium Access Control (MAC) Control Element (CE) including the mode configuration information, or Downlink Control Information (DCI) including the mode configuration information.
(13) The control terminal according to any one of (7) to (12) above, wherein the mode configuration information includes information used to switch any one of a control mode of the beamforming of the relay apparatus, a control mode of timing switching of the relay apparatus, and a control mode of on/off control of the relay apparatus.
(14) The control terminal according to any one of (7) to (13) above, wherein the mode configuration information includes information designating timing of switching of the control mode.
(15) A base station used in a mobile communication system including a control terminal that controls a relay apparatus that relays a radio signal between the base station and a user equipment, the base station including:
   a transmitter that transmits, to the control terminal, configuration information used by the relay apparatus to direct a beam to the user equipment.
(16) A communication method performed by a control terminal that controls a relay apparatus that relays a radio signal between a base station and a user equipment in a mobile communication system, the communication method including:
   receiving, from the base station, configuration information used by the relay apparatus to direct a beam to the user equipment; and
   controlling the relay apparatus to direct the beam to the user equipment, based on the configuration information.

### REFERENCE SIGNS

1: Mobile communication system
100: UE
100B: NCR-UE
100C: RIS-UE
110: Receiver
120: Transmitter
130: Controller
140: Interface
200: gNB
210: Transmitter
220: Receiver
230: Controller
240: Backhaul communicator
500A: NCR apparatus
500B: RIS apparatus
510A: Wireless unit
510a: Antenna unit
510b: RF circuit
510c: Directivity controller
520A: NCR controller
520B: RIS controller

## Claims

1. A control terminal configured to control a relay apparatus configured to relay a radio signal between a base station and a user equipment in a mobile communication system, the control terminal comprising:
a receiver configured to receive, from the base station, configuration information used by the relay apparatus to direct a beam to the user equipment; and
a controller configured to control the relay apparatus to direct the beam to the user equipment, based on the configuration information.

2. The control terminal according to claim 1, wherein
the configuration information comprises resource configuration information indicating a resource used for the control terminal to receive an uplink signal from the user equipment, and
the receiver is configured to receive the uplink signal from the user equipment by using the resource indicated by the resource configuration information, and
the controller is configured to control the relay apparatus to direct the beam to the user equipment according to the received uplink signal.

3. The control terminal according to claim 2, wherein
the controller is configured to
estimate a channel state between the control terminal and the user equipment by using the received uplink signal, and
control the relay apparatus to direct the beam to the user equipment according to the estimated channel state.

4. The control terminal according to claim 2, wherein
the uplink signal comprises beam control information, and
the controller is configured to
acquire the beam control information comprised in the received uplink signal, and
control the relay apparatus to direct the beam to the user equipment according to the acquired beam control information.

5. The control terminal according to claim 2, wherein
the receiver is configured to receive, from the base station, a Radio Resource Control (RRC) message comprising the resource configuration information.

6. The control terminal according to any one of claims 2 to 5, wherein
the resource configuration information comprises at least one selected from the group consisting of Physical Uplink Control Channel (PUCCH) configuration information indicating a configuration of a PUCCH of the user equipment, Physical Uplink Shared Channel (PUSCH) configuration information indicating a configuration of a PUSCH of the user equipment, Sounding Reference Signal (SRS) configuration information indicating a configuration of an SRS of the user equipment, and a Cell Radio Network Temporary Identifier (C-RNTI) assigned to the user equipment.

7. The control terminal according to claim 1, wherein
the configuration information comprises mode configuration information used to switch a control mode related to beamforming among a plurality of control modes, and
the controller is configured to control the relay apparatus to direct the beam to the user equipment by using the control mode configured according to the mode configuration information.

8. The control terminal according to claim 7, wherein
the plurality of control modes comprise a base station control mode in which the control terminal controls the relay apparatus according to control from the base station.

9. The control terminal according to claim 7 or 8, wherein
the plurality of control modes comprise an autonomous control mode in which the control terminal autonomously controls the relay apparatus without depending on the control from the base station.

10. The control terminal according to claim 7 or 8, wherein
the plurality of control modes further comprise a hybrid control mode in which the control from the base station and the autonomous control of the control terminal are used in combination.

11. The control terminal according to claim 7 or 8, wherein
the plurality of control modes further comprise a beam sweeping control mode in which a beam direction of the relay apparatus is sequentially switched.

12. The control terminal according to claim 7 or 8, wherein
the receiver is configured to receive, from the base station, a Radio Resource Control (RRC) message comprising the mode configuration information, a Medium Access Control (MAC) Control Element (CE) comprising the mode configuration information, or Downlink Control Information (DCI) comprising the mode configuration information.

13. The control terminal according to claim 7 or 8, wherein
the mode configuration information comprises information used to switch any one of a control mode of the beamforming of the relay apparatus, a control mode of timing switching of the relay apparatus, and a control mode of on/off control of the relay apparatus.

14. The control terminal according to claim 7 or 8, wherein
the mode configuration information comprises information designating timing of switching of the control mode.

15. A base station used in a mobile communication system comprising a control terminal configured to control a relay apparatus configured to relay a radio signal between the base station and a user equipment, the base station comprising:
a transmitter configured to transmit, to the control terminal, configuration information used by the relay apparatus to direct a beam to the user equipment.

16. A communication method performed by a control terminal configured to control a relay apparatus configured to relay a radio signal between a base station and a user equipment in a mobile communication system, the communication method comprising the steps of: receiving, from the base station, configuration information used by the relay apparatus to direct a beam to the user equipment; and
controlling the relay apparatus to direct the beam to the user equipment, based on the configuration information.
